# EUROPEAN PATENT APPLICATION

(11) **EP 3 875 393 A1**
(43) Date of publication of application: **08.09.2021**
(21) Application number: 19879229.3
(22) Date of filing: 28.10.2019
(51) Int. Cl.: B65D 43/02

(54) **BUCKLING STRUCTURE FOR COVER AND BOX OF PAPER-PLASTIC CONTAINER**

(30) Priority: 29.10.2018 CN 201821766026 U
(71) Applicant: Be Green Packaging Co., Ltd., Jiangsu 221200 (CN)
(72) Inventor: LIU, Zhijia, Xuzhou Jiangsu, 221200 (CN); TONG, Ji, Xuzhou Jiangsu, 221200 (CN)
(74) Representative: Asquith, Julian Peter
(86) International application number: PCT/CN2019/113701
(87) International publication number: WO 2020/088408

(57) **Abstract**

A buckling structure for the cover and box of a paper-plastic container, the paper-plastic container comprising a paper-plastic box (10) and a lid (20) covering the paper-plastic box (10). The paper-plastic box (10) comprises a box body (11) and a straight line part (12) extending out of the edge of the box body (11); the lid (20) comprises a lid body (21), a lid wall (22) extending out of the edge of the lid body (21), and a flange (23) arranged on the inner side wall of the lid wall (22); and the flange (23) and the lid body (21) are spaced apart. When the lid (20) covers the paper-plastic box (10), the straight line part (12) is clamped between the flange (23) and the lid body (21). In the buckling structure for the cover and box of the paper-plastic container, the straight line part (12) deforms under the pressing of the flange (23). When the straight line part (12) crosses over the flange (23), the straight line part (12) reverts to an original state or is still in a deformed state to be pressed against the lid wall (22), so that the paper-plastic box (10) and the lid (20) are sealed off by covering and cannot be separated from each other without external force.

## Description

### TECHNICAL FIELD

The present utility model pertains to the technical field of packaging, and particularly relates to a buckling structure for the cover and box of a paper-plastic container.

### BACKGROUND ART

Beverage cups generally use polyester (PET), polyethylene (PE) or polypropylene (PP) as a raw material, which is heated at a high temperature after the addition of an organic solvent and is then molded by method of blow molding, extrusion or injection molding in a mold of plastics. As plastics are hardly degradable and have a low recycling rate, they are very environmentally unfriendly. At present, many items have begun to use environmentally friendly paper material, such as hand bags and milk bags, but there is no precedent for using paper material to make beverage cups. Judging from hardness and moldability, paper material can absolutely be used to make beverage cups. Therefore, using paper material as the main material to produce beverage cups not only is environmentally friendly and safe but also forms a more beautiful appearance than that of plastic bottles and will be favored by more people. However, the lids of all beverage cups used at present directly cover the paper-plastic boxes and are not tight, so the beverage or suspension is liable to spillover and meanwhile the lids are easily separated with external force.

### SUMMARY OF THE UTILITY MODEL

In light of the above, the present utility model provides a novel buckling structure for the cover and box of a paper-plastic container of which lid is not easily separated, to solve the foregoing problems.

A buckling structure for the cover and box of a paper-plastic container is provided. The paper-plastic container comprises a paper-plastic box, and a lid covering the paper-plastic box. The paper-plastic box comprises a box body and a straight line part extending out of the edge of the box body. The lid comprises a lid body, a lid wall extending out of the edge of the lid body, and a flange arranged on the inner side wall of the lid wall. The flange and the lid body are spaced apart. In a cross section along the central axis of the box body, the included angle between the straight line part and the central axis is smaller than or equal to 90 degrees. In a cross section along the central axis of the box body, the flange comprises a section of lead-in part, a section of smooth part connected to the lead-in part, and a section of buckling part connected to the smooth part. The maximum diameter of the straight line part is greater than or equal to the minimum diameter of the lid wall. The buckling part is arc-shaped, and the central angle of the arc is greater than 90 degrees. When the lid covers the paper-plastic box, the straight line part is clamped between the buckling part and the lid body.

Further, the flange and a free end of the lid wall are spaced apart.

Further, in a cross section along the central axis of the box body, the lead-in part is arc-shaped.

Further, in a cross section along the central axis of the box body, the contour line of the side wall of the straight line part is in parallel with the contour line of the lid wall.

Further, in a cross section along the central axis of the box body, the included angle between the straight line part and the central axis of the box body is 90 degrees.

Further, in a cross section along the central axis of the box body, the smooth part is in parallel with the central axis of the box body.

Further, the central angle of the buckling part is 90 degrees.

Further, the distance from the buckling part to the lid body is equal to the thickness of the straight line part of the box body.

Compared with the prior art, the paper-plastic box and the lid of the buckling structure for the cover and box of a paper-plastic container provided by the present utility model have the straight line part and the flange respectively. The straight line part has certain elasticity. When the lid covers the paper-plastic box, the straight line part deforms under the pressing of the flange at first, and then crosses over the flange under the leading-in of the lead-in part, and at the moment, the straight line part reverts to an original state or is still in a deformed state to be pressed against the lid wall. Because the central angle of the buckling part is greater than 90 degrees, the straight line part can be buckled between the buckling part and the lid body, so that the paper-plastic box and the lid are sealed off by covering and cannot be separated from each other without external force.

### BRIEF DESCRIPTION OF THE DRAWINGS

FIG. 1 is a structural schematic view of a buckling structure for the cover and box of a paper-plastic container provided by the present utility model.
FIG. 2 is a sectional structural schematic view of the buckling structure for the cover and box of a paper-plastic container in FIG. 1.

### DETAILED DESCRIPTION

Below a specific embodiment of the present utility model is further described in detail. It should be understood that the description of the embodiment of the present utility model is not intended to limit the protection scope of the present utility model.

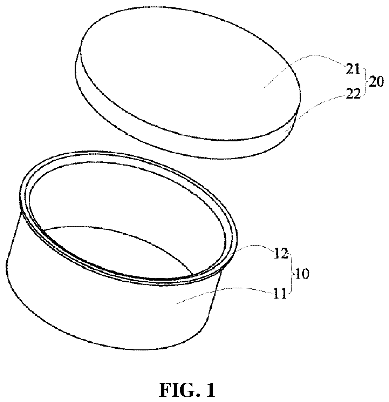

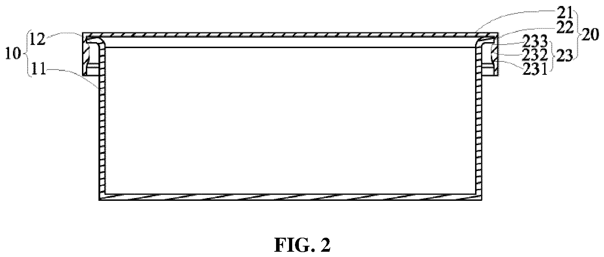

FIG. 1 and FIG. 2 are structural schematic views of a buckling structure for the cover and box of a paper-plastic container provided by the present utility model. The paper-plastic container in the buckling structure for the cover and box of a paper-plastic container comprises a paper-plastic box 10, and a lid 20 covering the paper-plastic box 10. It can be understood that the paper-plastic box 10 and the lid 20 both can be pressed from paper pulp or paper-plastic material.

The paper-plastic box 10 comprises a box body 11 and a straight line part 12 extending out of the edge of the box body 11. It is conceivable that the paper-plastic box 10 may further comprise some other functional structures, such as a cup handle part and an ornamental part, which are technologies known to those skilled in the art, and will not be described in detail here. The box body 11 is used to hold various items, such as liquid, suspension and solid, which is an existing technology and will not be described in detail here. According to the actual need, in a cross section along the central axis of the box body 11, the included angle between the straight line part 12 and the central axis of the box body 11 is smaller than or equal to 90 degrees. In this embodiment, the included angle between the straight line part 12 and the central axis of the box body 11 is 90 degrees.

The lid 20 comprises a lid body 21, a lid wall 22 extending out of the edge of the lid body 21, and a flange 23 arranged on the inner side wall of the lid wall 22. It is conceivable that the lid 20 may further comprise some other functional structures, such as a lifting handle and a jack. The lid body 21 is a technology known to those skilled in the art, and will not be described in detail here. The flange 23 and the lid body 21 are spaced apart. In a cross section along the central axis of the box body 11, the flange 23 comprises a section of lead-in part 231, a section of smooth part 232 connected to the lead-in part 231, and a section of buckling part 233 connected to the smooth part 232. In a cross section along the central axis of the box body 11, the lead-in part 231 is arc-shaped to facilitate the slip-in of the straight line part 12 of the box body 11. The smooth part 232 protrudes towards the central axis of the box body 11 to enhance the strength of the lid wall 22. The buckling part 233 is arc-shaped, and the central angle of the arc is greater than or equal to 90 degrees. In this embodiment, the central angle of the buckling part 233 is equal to 90 degrees. When the lid 20 covers the paper-plastic box 11, the straight line part 12 is clamped between the buckling part 233 and the lid body 21. In order to make the straight line part 12 contact a surface of the lid wall 22, in a cross section along the central axis of the box body, the contour line of the side wall of the straight line part 12 is in parallel with the contour line of the lid wall 22. Further, in order to provide a greater error-tolerant rate, the flange 23 and a free end of the lid wall 22 are spaced apart.

Compared with the prior art, the paper-plastic box 10 and the lid 20 of the buckling structure for the cover and box of a paper-plastic container provided by the present utility model have the straight line part 12 and the flange 23, respectively. The straight line part 12 has certain elasticity. When the lid 20 covers the paper-plastic box 10, the straight line part 12 deforms under the pressing of the flange 23 at first, and then crosses over the flange 23 under the leading-in of the lead-in part 233, and at the moment, the straight line part 12 reverts to an original state or is still in a deformed state to be pressed against the lid wall 22. Because the central angle of the buckling part 233 is greater than 90 degrees, the straight line part 12 can be buckled between the buckling part 233 and the lid body 21, so that the paper-plastic box 10 and the lid 20 are sealed off by covering and cannot be separated from each other without external force.

The above embodiment is only a preferred embodiment of the present utility model and is not intended to limit the protection scope of the present utility model. All modifications, identical replacements and improvements made without departing from the spirit of the present utility model shall be within the protection scope of the present utility model.

## Claims

1. A buckling structure for the cover and box of a paper-plastic container, the paper-plastic container comprising a paper-plastic box and a lid covering the paper-plastic box, wherein the paper-plastic box comprises a box body and a straight line part extending out of the edge of the box body, the lid comprises a lid body, a lid wall extending out of the edge of the lid body, and a flange arranged on the inner side wall of the lid wall, the flange and the lid body are spaced apart, in a cross section along the central axis of the box body the included angle between the straight line part and the central axis is smaller than or equal to 90 degrees, in a cross section along the central axis of the box body the flange comprises a section of lead-in part, a section of smooth part connected to the lead-in part, and a section of buckling part connected to the smooth part, the maximum diameter of the straight line part is greater than or equal to the minimum diameter of the lid wall, the buckling part is arc-shaped, the central angle of the arc is greater than 90 degrees, and when the lid covers the paper-plastic box, the straight line part is clamped between the buckling part and the lid body.

2. The buckling structure for the cover and box of a paper-plastic container according to claim 1, wherein the flange and a free end of the lid wall are spaced apart.

3. The buckling structure for the cover and box of a paper-plastic container according to claim 1, wherein in a cross section along the central axis of the box body, the lead-in part is arc-shaped.

4. The buckling structure for the cover and box of a paper-plastic container according to claim 1, wherein in a cross section along the central axis of the box body, the contour line of the side wall of the straight line part is in parallel with the contour line of the lid wall.

5. The buckling structure for the cover and box of a paper-plastic container according to claim 1, wherein in a cross section along the central axis of the box body, the included angle between the straight line part and the central axis of the box body is 90 degrees.

6. The buckling structure for the cover and box of a paper-plastic container according to claim 1, wherein in a cross section along the central axis of the box body, the smooth part is in parallel with the central axis of the box body.

7. The buckling structure for the cover and box of a paper-plastic container according to claim 1, wherein the central angle of the buckling part is 90 degrees.

8. The buckling structure for the cover and box of a paper-plastic container according to claim 1, wherein the distance from the buckling part to the lid body is equal to the thickness of the straight line part of the box body.
